# EUROPEAN PATENT APPLICATION

(11) **EP 4 694 315 A1**
(43) Date of publication of application: **11.02.2026**
(21) Application number: 23929185.9
(22) Date of filing: 28.03.2023
(51) Int. Cl.: H04W 28/08

(54) **TASK PROCESSING METHODS, AND APPARATUS**

(71) Applicant: Beijing Xiaomi Mobile Software Co., Ltd., Beijing 100085 (CN)
(72) Inventor: CHEN, Dong, Beijing 100085 (CN); SUN, Yuze, Beijing 100085 (CN)
(74) Representative: Stöckeler, Ferdinand
(86) International application number: PCT/CN2023/084480
(87) International publication number: WO 2024/197586

(57) **Abstract**

The present disclosure relates to the technical field of communications, and provides task processing methods and an apparatus. A task processing method provided in the embodiments of the present disclosure comprises: a first network element receiving a task computing request sent by an application function (AF), the task computing request carrying task information of a computing task and computing resource information of a plurality of terminal equipments (UEs); according to the task information and the computing resource information, dividing the computing task into a plurality of computing sub-tasks to undergo distributed execution by the first network element and/or the UEs; determining a plurality of task execution results of the plurality of computing sub-tasks; and, by means of a second network element, sending the plurality of task execution results to the AF. The present disclosure can solve technical problems of the terminal devices being unable to effectively share the task pressure on 6G core networks, being unable to give full scope to the computing power values of the terminal devices, and being unable to satisfy specific task requirements.

## Description

### TECHNICAL FIELD

The disclosure relates to the field of communication technologies, and in particular to task processing methods and devices.

### BACKGROUND

In the 6^{th} Generation (6G) era of the Internet of Everything, artificial intelligence (AI)/machine learning (ML) technologies represented by deep learning and reinforcement learning will be closely integrated with communication networks to establish an inseparable relationship. At the same time, with the development of computation power, the computation power of terminals is increasing and the functions of terminals become more diversified. In the future, more calculation tasks will be transferred to a terminal side for execution. This not only alleviates the resource pressure of the core network, but also effectively reduces the end-to-end latency, thereby making business services, such as augmented reality (AR), virtual reality (VR) and virtual office, more possible and extensible.

For task processing, edge calculation and federated learning under the 5^{th} Generation (5G) of communication are currently common. However, there is no method of collaborating the calculation and storage adapted to the 6G distributed network architecture, which makes it impossible for the terminal (or called User Equipment, UE) to effectively share the task pressure borne by the 6G core network, to fully exert its computation power value, and to meet specific task requirements to a certain extent.

### SUMMARY

The disclosure provides task processing methods and devices, to solve a technical problem that UE cannot effectively share the task pressure borne by a 6G core network, cannot fully exert its computation power value, and cannot meet specific task requirements.

A first aspect of embodiments of the disclosure provides a task processing method, performed by a first network element. The method includes:
receiving a task calculation request sent by an application function (AF), in which the task calculation request carries task information of a calculation task and calculation resource information of a plurality of user equipment (UEs);
dividing the calculation task into a plurality of calculation sub-tasks to be executed in a distributed manner by the first network element and/or UEs, based on the task information and the calculation resource information;
determining a plurality of task execution results of the plurality of calculation sub-tasks; and
sending the plurality of task execution results to the AF via a second network element.

A second aspect of embodiments of the disclosure provides a task processing method, performed by an application function (AF). The method includes:
receiving calculation service requests sent by a plurality of user equipment (UE) via an access and mobility management function (AMF), in which the calculation service requests include calculation task requirement information and calculation resource information of the plurality of UEs;
in response to the calculation service request, sending a task calculation request to a first network element, in which the task calculation request carries task information of a calculation task and the calculation resource information of the plurality of UEs, and the task calculation request is configured to instruct the first network element to divide the calculation task into a plurality of calculation sub-tasks to be executed in a distributed manner by the first network element and/or UEs based on the task information and the calculation resource information.

A third aspect of embodiments of the disclosure provides a task processing method, performed by a user equipment (UE). The method includes:
sending a calculation service request to an application function (AF) via an access and mobility management function (AMF);
in which the calculation service request is configured to trigger the AF to send a task calculation request to a first network element, the task calculation request carries task information of a calculation task and calculation resource information of a plurality of user equipment (UEs), and the task calculation request is configured to instruct the first network element to divide, based on the task information and the calculation resource information, the calculation task into a plurality of calculation sub-tasks to be executed in a distributed manner by the first network element and/or UEs.

A fourth aspect of embodiments of the disclosure provides a task processing method, performed by a core network. The method includes:
receiving calculation service requests sent by a plurality of user equipment (UE), in which the calculation service requests include calculation task requirement information and calculation resource information of the plurality of UEs;
in response to the calculation service request, dividing a calculation task into a plurality of calculation sub-tasks to be executed in a distributed manner by a first network element and/or UEs;
analyzing a plurality of task execution results of the plurality of calculation sub-tasks to obtain a task processing result of the calculation task; and
sending the task processing result of the calculation task to the plurality of UEs.

A fifth aspect of embodiments of the disclosure provides a task processing device, applied to a first network element. The device includes:
a receiving module, configured to receive a task calculation request sent by an application function (AF), in which the task calculation request carries task information of a calculation task and calculation resource information of a plurality of user equipment (UEs);
a processing module, configured to divide the calculation task into a plurality of calculation sub-tasks to be executed in a distributed manner by the first network element and/or UEs, based on the task information and the calculation resource information;
a processing module, configured to determine a plurality of task execution results of the plurality of calculation sub-tasks; and
a sending module, configured to send the plurality of task execution results to the AF via a second network element.

A sixth aspect of embodiments of the disclosure provides a task processing device, applied to an application function (AF). The device includes:
a receiving module, configured to receive calculation service requests sent by a plurality of user equipment (UE) via an access and mobility management function (AMF), in which the calculation service requests include calculation task requirement information and calculation resource information of the plurality of UEs;
a sending module, configured to send a task calculation request to a first network element in response to the calculation service request, in which the task calculation request carries task information of a calculation task and the calculation resource information of the plurality of UEs, and the task calculation request is configured to instruct the first network element to divide, based on the task information and the calculation resource information, the calculation task into a plurality of calculation sub-tasks to be executed in a distributed manner by the first network element and/or UE.

A seventh aspect of embodiments of the disclosure provides a task processing device, applied to a user equipment (UE). The device includes:
a sending module, configured to send a calculation service request to an application function (AF) via an access and mobility management function (AMF);
in which the calculation service request is configured to trigger the AF to send a task calculation request to a first network element, the task calculation request carries task information of a calculation task and calculation resource information of a plurality of UEs, and the task calculation request is configured to instruct the first network element to divide, based on the task information and the calculation resource information, the calculation task into a plurality of calculation sub-tasks to be executed in a distributed manner by the first network element and/or UEs.

An eighth aspect of embodiments of the disclosure provides a task processing device, applied to a core network. The device includes:
a receiving module, configured to receive calculation service requests sent by a plurality of user equipment (UE), in which the calculation service requests include calculation task requirement information and calculation resource information of the plurality of UEs;
a processing module, configured to, in response to the calculation service request, divide the calculation task into a plurality of calculation sub-tasks to be executed in a distributed manner by the first network element and/or UEs;
a processing module, configured to analyze the plurality of task execution results of the plurality of calculation sub-tasks to obtain a task processing result of the calculation task; and
a sending module, configured to send the task processing result of the calculation task to the plurality of UEs.

A ninth aspect of embodiments of the disclosure provides a communication device, including: a transceiver; a memory; and a processor connected to the transceiver and the memory and configured to control a wireless signal reception and transmission of the transceiver by executing computer-executable instructions stored on the memory and to implement the method of the first aspect of embodiments, the second aspect of embodiments, the third aspect of embodiments, or the fourth aspect of embodiments of the disclosure.

A tenth aspect of embodiments of the disclosure provides a computer storage medium, in which the computer storage medium has computer-executable instructions stored thereon, after the computer-executable instructions are executed by a processor, the method of the first aspect of embodiments, the second aspect of embodiments, the third aspect of embodiments, or the fourth aspect of embodiments of the disclosure is implemented.

The embodiments of the disclosure provide task processing methods and devices, after receiving the task calculation request sent by the AF, the first network element may divide, based on the task information of the calculation task and the calculation resource information of the plurality of UEs carried in the task calculation request, the calculation task into the plurality of calculation sub-tasks to be executed in the distributed manner by first network element(s) and/or UE(s). Thereafter, a plurality of task execution results of the plurality of calculation sub-tasks are determined, and the plurality of task execution results are sent to the AF via the second network element. With the technical solution of the disclosure, the distributed calculation is performed on the network side and/or the UE side by dividing the calculation task based on the task information and the calculation resource information. This collaborative working way may more efficiently utilize various types of calculation resources, thereby better executing specific businesses or services.

Additional aspects and advantages of the disclosure will be given in part in the following description and in part will be obvious from the following description or learned through practice of the disclosure.

### BRIEF DESCRIPTION OF THE DRAWINGS

The above and/or additional aspects and advantages of the disclosure will become apparent and easily understood from the following description of the embodiments in conjunction with the accompanying drawings.
FIG. 1 is a schematic flowchart illustrating a task processing method according to an embodiment of the disclosure.
FIG. 2 is a schematic flowchart illustrating a task processing method according to an embodiment of the disclosure.
FIG. 3 is a schematic flowchart illustrating a task processing method according to an embodiment of the disclosure.
FIG. 4 is a schematic flowchart illustrating a task processing method according to an embodiment of the disclosure.
FIG. 5 is a schematic flowchart illustrating a task processing method according to an embodiment of the disclosure.
FIG. 6 is a schematic flowchart illustrating a task processing method according to an embodiment of the disclosure.
FIG. 7 is a schematic flowchart illustrating a task processing method according to an embodiment of the disclosure.
FIG. 8 is a diagram illustrating an architecture of a 6^{th} generation (6G) distributed calculation and storage separation network according to an embodiment of the disclosure.
FIG. 9 is a timing diagram of a task processing method according to an embodiment of the disclosure.
FIG. 10 is a block diagram illustrating a task processing device according to an embodiment of the disclosure.
FIG. 11 is a block diagram illustrating a task processing device according to an embodiment of the disclosure.
FIG. 12 is a block diagram illustrating a task processing device according to an embodiment of the disclosure.
FIG. 13 is a block diagram illustrating a task processing device according to an embodiment of the disclosure.
FIG. 14 is a schematic diagram illustrating the structure of a communication device according to an embodiment of the disclosure.
FIG. 15 is a schematic diagram illustrating the structure of a chip according to an embodiment of the disclosure.

### DETAILED DESCRIPTION

Embodiments of the disclosure are described in detail below, and examples of the embodiments are shown in the accompanying drawings, in which the same or similar reference numerals throughout represent the same or similar elements or elements having the same or similar functions. The embodiments described below with reference to the accompanying drawings are illustrative and are intended to be used to explain the disclosure and should not be construed as limiting the disclosure.

Embodiments of the disclosure will be described in detail below, and examples of the embodiments are shown in the accompanying drawings, in which the same or similar reference numerals throughout represent the same or similar elements or elements having the same or similar functions. The embodiments described below with reference to the accompanying drawings are illustrative and are intended to be used to explain the disclosure and should not be construed as limitations on the disclosure. It should be noted that, if there is no conflict, the embodiments of the disclosure and the features in the embodiments may be combined with each other.

The terms used in the embodiments of the disclosure are only for the purpose of describing specific embodiments and are not intended to limit the embodiments of the disclosure. The singular forms of "a" and "the" used in the embodiments of the disclosure and the appended claims are also intended to include plural forms, unless the context clearly indicates other meanings. It should also be understood that the term "and/or" used herein refers to and includes any or all possible combinations of one or more associated listed items.

It should be understood that, although the terms "first", "second", "third", etc. may be used to describe various information in the embodiments of the disclosure, these information should not be limited to these terms. These terms are only used to distinguish the same type of information from each other. For example, without departing from the scope of the embodiments of the disclosure, the "first information" may also be referred to as the "second information", and similarly, the "second information" may also be referred to as the "first information". Depending on the context, the word "if" as used herein may be interpreted as "at the time of", "when" or "in response to determining".

For task processing, edge calculation and federated learning under the 5^{th} generation (5G) of communication are currently common. However, there is no method of collaborating the calculation and storage adapted to the 6G distributed network architecture, which makes it impossible for the user equipment (UE) to effectively share the task pressure borne by the 6G core network, to fully exert its computation power value, and to meet specific task requirements to a certain extent.

To this end, the embodiments provide task processing methods and devices, to solve a technical problem that the UE cannot effectively share the task pressure borne by the 6G core network, cannot fully exert its computation power value, and cannot meet the specific task requirements.

The task processing methods and devices according to the disclosure will be described in detail below with reference to the accompanying drawings.

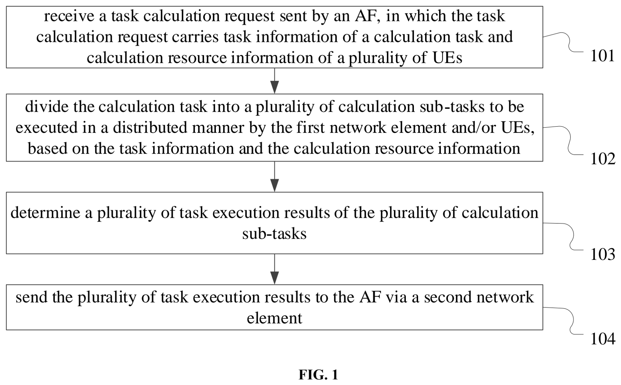

FIG. 1 is a schematic flowchart illustrating a task processing method according to an embodiment of the disclosure. As illustrated in FIG. 1, the method is performed by a first network element. The first network element may be a calculation network element in a 6G core network. Embodiments may include the following.

At step 101, a task calculation request sent by an application function (AF) is received. The task calculation request carries task information of a calculation task and calculation resource information of a plurality of UEs.

In a specific application scenario, the task calculation request may be a calculation instruction generated by the AF in response to calculation service requests after receiving the calculation service requests sent by UEs via an access and mobility management function (AMF). In detail, each UE may send the calculation service request for triggering a calculation service process to the AMF via a radio access network (RAN), and the calculation service request includes calculation task requirement information and calculation resource information of the UE. The AMF may pass the calculation service requests to the corresponding AF, and the AF further generates the task calculation request corresponding to the calculation service requests and sends the task calculation request to the first network element. The task calculation request carries the task information of the calculation task and calculation resource information of the plurality of UEs. The task information may include data volume, a type and characteristics of the calculation task, which are not limited here. The calculation resource information may include maximum task processing resources of UEs, available task processing resources of UEs in a current state, and calculation and storage capabilities of UEs corresponding to task processing resources, which are not limited here.

At step 102, the calculation task is divided into a plurality of calculation sub-tasks that are executed in a distributed manner by first network element(s) and/or UE(s), based on the task information and the calculation resource information.

The plurality of calculation sub-tasks include at least one of the following: at least one first calculation sub-task to be executed by at least one first network element, in which the at least one first calculation sub-task is adapted to at least one task processing capability of the at least one first network element; or at least one second calculation sub-task to be executed by at least one target UE among the plurality of UEs, in which the at least one second calculation sub-task is adapted to at least one task processing capability of the at least one target UE.

In a specific application scenario, the first network element may pre-store a respective node characteristic of each task execution node (such as network node and/or UE). For example, the network node is suitable for executing resource-intensive and computationally complex calculation tasks that have high requirements for calculation resources, while the UE is suitable for executing calculation tasks that have small data volumes, simple calculations, and low requirements for calculation resources. It should be noted that each task execution node may also include other node characteristics for adaptively dividing the calculation task, which are not limited here. For the embodiments of the disclosure, the first network element may determine task attributes and task execution nodes suitable for executing the calculation task under the task attributes based on the task information and the calculation resource information and may divide the calculation task into a plurality of calculation sub-tasks to be executed in the distributed manner in accordance with the task execution nodes. A calculation sub-task is part of the calculation task, and the calculation sub-tasks constitute a complete calculation task. By dividing calculation task into the plurality of calculation sub-tasks and executing the plurality of calculation sub-tasks simultaneously in a distributed manner, this collaborative working method may improve the efficiency of executing the calculation task, which allows the network node and massive UEs to fully exert their computation power value and widely participate in calculation and storage, thereby effectively sharing the task pressure borne by the network, meeting specific task requirements to a certain extent and reducing privacy and security risks.

Accordingly, the first network element divides the calculation task into a plurality of calculation sub-tasks to be executed in the distributed manner in the following manners.

As a possible implementation, in a case where the first network element determines that the task attributes are suitable for execution on the network side, based on the task information and the calculation resource information, the first network element may determine one or more task execution nodes (such as the one or more first network elements) on the network side for executing the calculation task. When a plurality of first network elements are determined on the network side for executing the calculation task, the calculation task may be divided into a plurality of first calculation sub-tasks to be executed in the distributed manner in accordance with the plurality of first network elements. Each first network element is configured to execute a respective part of the calculation task, namely, a respective first calculation sub-task.

As a possible implementation, in a case where the first network element determines that the task attributes are suitable for execution by UEs based on the task information and the calculation resource information, the first network element may determine one or more task execution nodes (such as one or more target UEs) for executing the calculation task from a plurality of UEs based on the calculation resource information of the plurality of UEs. In a case where a plurality of target UEs for executing the calculation task are determined on the network side, the calculation task may be divided into a plurality of second calculation sub-tasks to be executed in a distributed manner in accordance with the plurality of target UEs, and the second calculation sub-tasks may be sent to the target UEs for calculation. Each target UE is used to execute a respective part of the calculation task.

As a possible implementation, in a case where the first network element determines that the task attributes are suitable for being collaborative execution between the network side and the UE side, based on the task information and the calculation resource information, the first network element may determine one or more task execution nodes (such as one or more first network elements) on the network side for executing the calculation task and determine one or more task execution nodes (such as one or more target UEs) for executing the calculation task from the plurality of UEs based on the calculation resource information of the plurality of UEs. Further, the first network element may divide the calculation task into one or more first calculation sub-tasks executed by the one or more first network elements and one or more second calculation sub-task executed by the one or more target UEs, execute one or more first calculation sub-task locally, and send one or more second calculation sub-tasks to the one or more target UEs for calculation.

At step 103, a plurality of task execution results of the plurality of calculation sub-tasks are determined.

For embodiments of the disclosure, the plurality of task execution results of the plurality of calculation sub-tasks are determined in the following manners.

As a possible implementation, in a case where the plurality of first network elements execute the plurality of first calculation sub-tasks in a distributed manner, a respective first task execution result is obtained after each of the plurality of first network elements executes a corresponding first calculation sub-task.

As a possible implementation, in a case where the plurality of second calculation sub-tasks are executed by the plurality of target UEs in a distributed manner, after the plurality of target UEs execute the second calculation sub-tasks respectively, the plurality of target UEs may send second task execution results to the AMF, and the AMF feeds back the second task execution results to the first network element on the network side. Further, the first network element may obtain a respective second task execution result obtained after each target UE in the plurality of UEs executes a corresponding second calculation sub-task.

As a possible implementation, in a case where the calculation task is performed collaboratively by the network side and the UE side, a respective first task execution result obtained after each first network element locally executes a corresponding first calculation sub-task may be obtained, and a respective second task execution result obtained after each target UE executes a corresponding second calculation sub-task may be obtained via the AMF. The specific implementation process of obtaining the second task execution results by the first network element via the AMF may be that: after the plurality of target UEs execute the second calculation sub-tasks, the plurality of target UEs send the second task execution results obtained after the execution to AMF, and the AMF feeds back the second task execution results to the first network element on the network side.

At step 104, the plurality of task execution results are sent to the AF via a second network element.

The second network element may be a storage network element in the 6G core network.

For the embodiments of the disclosure, after determining the plurality of task execution results of the plurality of calculation sub-tasks, the first network element may aggregate the plurality of task execution results and further send aggregated task execution results of the calculation task to the second network element so that the second network element stores the aggregated task execution results. In addition, the second network element may also send the aggregated task execution results to the AF, so that the AF may determine the task processing result of the calculation task through statistical analysis of the task execution results, send and feeds back the task processing result of the calculation task to the UE

In conclusion, with the task processing method according to the embodiments of the disclosure, after receiving the task calculation request sent by the AF, the first network element may divide the calculation task into the plurality of calculation sub-tasks to be executed in the distributed manner by first network element(s) and/or UE(s) based on the task information of the calculation task and the calculation resource information of the plurality of UEs carried in the task calculation request. The task execution results of the plurality of calculation sub-tasks are determined, and the plurality of task execution results are sent to the AF via the second network element. In the technical solution of the disclosure, the distributed calculation is performed on the network side and/or the UE side by dividing the calculation task based on the task information and the calculation resource information. This collaborative working method may more efficiently utilize various types of calculation resources, thereby better executing specific businesses or services.

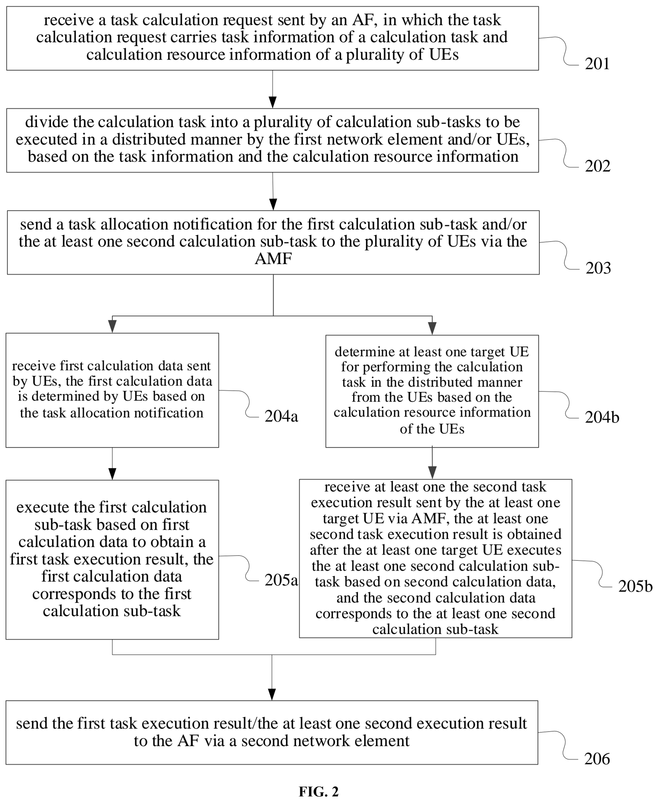

FIG. 2 is a schematic flowchart illustrating a task processing method according to an embodiment of the disclosure. As illustrated in FIG. 2, the method is performed by a first network element. The method may include the following.

At step 201, a task calculation request sent by an AF is received. The task calculation request carries task information of a calculation task and calculation resource information of a plurality of UEs.

For the specific implementation process of the embodiments of the disclosure, reference may be made to the relevant description in step 101 of the embodiments, which will not be repeated here.

At step 202, the calculation task is divided into a plurality of calculation sub-tasks to be executed in a distributed manner by first network element(s) and/or UE(s), based on the task information and the calculation resource information.

For the specific implementation process of the embodiments of the disclosure, reference may be made to the relevant description in step 102 of the embodiments, which will not be repeated here.

At step 203, a task allocation notification for first calculation sub-task(s) and/or second calculation sub-task(s) is send to the plurality of UEs via an AMF.

For the embodiments of the disclosure, after the first network element divides the calculation task into first calculation sub-task(s) and/or second calculation sub-task(s) to be executed in the distributed manner, the first network element may send the task allocation notification for the first calculation sub-task(s) and/or the second calculation sub-task(s) to the plurality of UEs. In detail, the first network element may send the task allocation notification to the AMF and use the AMF to send the task allocation notification to each UE via the RAN.

In a specific application scenario, as a possible implementation, the task allocation notification may contain a plurality of first calculation sub-tasks executed by a plurality of first network elements. In this case, the steps 204a to 205a may be further executed to obtain the first task execution results corresponding to the plurality of first calculation sub-tasks. As a possible implementation, the task allocation notification may contain a plurality of second calculation sub-tasks executed by a plurality of target UEs. In this case, the steps 204b to 205b may be further executed to obtain the second task execution results corresponding to the plurality of second calculation sub-tasks. As a possible implementation, the task allocation notification may contain the first calculation sub-tasks executed by the first network elements and the second calculation sub-tasks executed by the target UEs. In this case, the steps 204a to 205a may be further executed and the steps 204b to 205b may be synchronously executed to obtain the first task execution results corresponding to the plurality of first calculation sub-tasks and the second task execution results corresponding to the plurality of second calculation sub-tasks.

At step 204a, first calculation data sent by the plurality of UEs are received. The first calculation data is determined by the plurality of UEs based on the task allocation notification.

In a specific application scenario, after the first network element sends the task allocation notification to the plurality of UEs, in a case that the task allocation notification contains the first calculation sub-tasks executed by the first network elements, the UEs may determine the first calculation data corresponding to the first calculation sub-tasks. In a case where the task allocation notification includes second calculation sub-tasks executed by the target UEs, the UEs may determine the second calculation data corresponding to the second calculation sub-tasks.

For the embodiments of the disclosures, in a case that the task allocation notification contains the first calculation sub-tasks to be executed by the first network elements, after determining the first calculation data corresponding to the first calculation sub-tasks, the UEs may send the first calculation data that needs to be calculated within the network to the first network elements via a user plane. Accordingly, the first network elements may receive the first calculation data sent by the plurality of UEs.

At step 205a, the first calculation sub-tasks are executed based on first calculation data to obtain first task execution results. The first calculation data is calculation data corresponding to the first calculation sub-tasks.

With the embodiments of the disclosure, after the first network elements receive the first calculation data, the first network elements may perform calculation of the first calculation sub-tasks based on the first calculation data in the network to obtain the first task execution results.

At step 204b, parallel to step 204a of the embodiments, at least one target UE for executing the calculation task in the distributed manner is determined among the plurality of UEs based on the calculation resource information of the plurality of UEs.

For the embodiments of the disclosure, in a case that the task allocation notification contains second calculation sub-task(s) to be executed by the target UE(s), the first network element may determine one or more target UEs for executing the calculation task among the plurality of UEs based on the calculation resource information of the plurality of UEs.

At step 205b, at least one second task execution result is received from at least one target UE via an AMF. The at least one second task execution result is obtained after at least one target UE executes the at least one second calculation sub-task based on second calculation data. The second calculation data is calculation data corresponding to the at least one second calculation sub-task.

For the embodiments of the disclosure, in a case that the task allocation notification contains second calculation sub-tasks to be executed by the target UEs, each target UE may call local computation power to perform the calculation of a respective second calculation sub-task after determining the second calculation data corresponding to the second calculation sub-task, to obtain a respective second task execution result. Each target UE may send the respective second task execution result to the AMF, and the AMF will feed back the calculation result to the first network element in the network. Accordingly, the first network element may receive the second task execution result(s) sent by at least one target UE via the AMF.

At step 206, the first task execution result(s) and/or the second task execution result(s) are sent to the AF via a second network element.

For the embodiments of the disclosure, as a possible implementation, in a case that the calculation task is executed in the distributed manner by a plurality of first network elements, a plurality of first task execution results may be obtained after the plurality of first network elements execute respective first calculation sub-tasks in a distributed manner, and the plurality of first task execution results are aggregated and sent to the second network element, such that the second network element stores aggregated first task execution results. In addition, the second network element may also send the aggregated first task execution results to the AF, so that the AF may determine the task processing result of the calculation task through statistical analysis of the first task execution results, send and feed back the task processing result of the calculation task to the UEs.

For the embodiments of the disclosure, as a possible implementation, in a case that the calculation task is executed by a plurality of target UEs in a distributed manner, a plurality of second task execution results may be obtained after the plurality of target UEs execute respective second calculation sub-tasks in the distributed manner, and the plurality of second task execution results are aggregated and sent to the second network element, such that the second network element stores the aggregated second task execution results. In addition, the second network element may also send the aggregated second task execution results to the AF, so that the AF may determine the task processing result of the calculation task through statistical analysis of the second task execution results, send and feed back the task processing result of the calculation task to the UEs.

For the embodiments of the disclosure, as a possible implementation, in the case that the calculation task is executed collaboratively by the network side and the UE side, one or more first task execution results may be obtained after one or more first network elements execute one or more first calculation sub-tasks in a distributed manner and one or more second task execution results may be obtained after one or more target UEs execute one or more second calculation sub-tasks in a distributed manner . The first network element may aggregate the one or more first task execution results and the one or more second task execution results and send them to the second network element, such that the second network element may store them. In addition, the second network element may also send the aggregated first task execution results and the second task execution results to the AF, so that the AF may determine the task processing result of the calculation task through statistical analysis of the first task execution results and the second task execution results, send and feed back the task processing result of the calculation task to the UEs.

In conclusion, with the task processing method according to the embodiments of the disclosure, after receiving the task calculation request sent by the a AF, the first network element may divide the calculation task into the plurality of calculation sub-tasks to be executed by first network element(s) and/or UE(s) in the distributed manner based on the task information of the calculation task and the calculation resource information of a plurality of UEs carried in the task calculation request. The plurality of task execution results of the plurality of sub-tasks are determined, and the plurality of task execution results are sent to the AF via the second network element. In the technical solution of the disclosure, distributed calculation is performed on the network side and/or the UE side by dividing the calculation task based on the task information and the calculation resource information. This collaborative working method may more efficiently utilize various types of calculation resources, thereby better executing specific businesses or services.

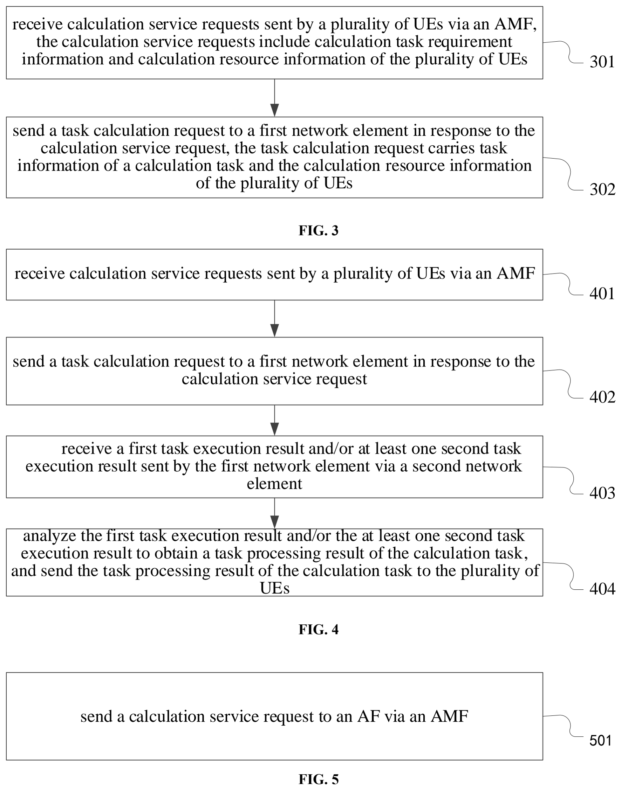

FIG. 3 is a schematic flowchart illustrating a task processing method according to an embodiment of the disclosure. As illustrated in FIG. 3, the method is performed by an AF. The method includes the following.

At step 301, calculation service requests sent by a plurality of UEs via an AMF are received. The calculation service requests include calculation task requirement information and calculation resource information of the plurality of UEs.

In a specific application scenario, each UE may send the calculation service request for triggering a calculation service process to the AMF via an RAN. The calculation service request includes the calculation task requirement information and the calculation resource information of the UE. The AMF may pass the calculation service request to the corresponding AF. Correspondingly, for the embodiments of the disclosure, the AF may receive the calculation services request sent by the UEs via the AMF. The calculation task requirement information may include task information of the calculation task, such as data volume, a type and characteristics of the calculation task, which are not limited here. The calculation resource information may include maximum task processing resources of the UEs, available task processing resources of the UEs in a current state, calculation and storage capabilities of the UEs corresponding to task processing resources, which are not limited here.

At step 302, in response to the calculation service request, a task calculation request is sent to the first network element. The task calculation request carries the task information of the calculation task and the calculation resource information of the plurality of UEs.

For the embodiments of the disclosure, after receiving the calculation service requests sent by the plurality of UEs, the AF may further generate the task calculation request corresponding to the calculation service requests and send the task calculation request to the first network element. The task calculation request carries the task information of the calculation task and the calculation resource information of the plurality of UEs.

The task calculation request is configured to instruct the first network element to divide the calculation task into a plurality of sub-tasks to be executed in a distributed manner based on the task information and the calculation resource information. The plurality of calculation sub-tasks include at least one of the following: one or more first calculation sub-tasks executed by one or more first network elements, in which the one or more first calculation sub-tasks are adapted to one or more task processing capabilities of the one or more first network elements; or at least one second calculation sub-task executed by at least one target UE among the plurality of UEs, in which the at least one second calculation sub-task is adapted to at least one task processing capability of the at least one target UE. By dividing the calculation task into the plurality of calculation sub-tasks to be executed in the distributed manner and executing the plurality of calculation sub-tasks in parallel, this collaborative working method may improve the efficiency of executing the calculation task, so that network node(s) and massive UEs may fully exert their computation power value and widely participate in calculation and storage, thereby effectively sharing the task pressure borne by the network, meeting specific task requirements to a certain extent, and reducing privacy and security risks.

In conclusion, with the task processing method according to the embodiments of the disclosure, the AF may send the task calculation request to the first network element in response to the calculation service request sent by the UE, so that the first network element divides the calculation task into the plurality of calculation sub-tasks to be executed in the distributed manner by first network element(s) and/or UE(s) based on the task information of the calculation task and the calculation resource information of the plurality of UE carried in the task calculation request. In the technical solution of the disclosure, by sending the task calculation request to the first network element, it enables the first network element to divide the calculation task based on the task information and the calculation resource information, such that distributed calculation may be performed on the network side and/or the UE side. This collaborative working method may more efficiently utilize various types of calculation resources, thereby better executing specific businesses or services.

FIG. 4 is a schematic flowchart illustrating a task processing method according to an embodiment of the disclosure. As illustrated in FIG. 4, the method is performed by an AF. The method may include the following.

At step 401, calculation service requests sent by UEs via an AMF are received.

For the specific implementation process of the embodiments of the disclosure, reference may be made to the relevant description in step 301 of the embodiments, which will not be repeated here.

At step 402, in response to the calculation service requests, a task calculation request is sent to the first network element.

For the specific implementation process of the embodiments of the disclosure, reference may be made to the relevant description in step 302 of the embodiments, which will not be repeated here.

At step 403, first task execution result(s) and/or second task execution result(s) sent by the first network element via a second network element are received.

One or more first task execution results are obtained after one or more first network elements execute one or more first calculation sub-tasks based on first calculation data. The first calculation data is calculation data corresponding to the one or more first calculation sub-tasks. At least one second task execution result is obtained after at least one target UE executes at least one second calculation sub-task based on the second calculation data. The second calculation data is the calculation data corresponding to the at least one second calculation sub-task.

For the embodiments of the disclosure, as a possible implementation, in the case that the calculation task is executed in the distributed manner by a plurality of first network elements, the first network element may obtain the plurality of first task execution results after the plurality of first network elements execute the first calculation sub-tasks in the distributed manner, aggregate the plurality of first task execution results and send them to the second network element, such that the second network element may store them. In addition, the second network element may also send the aggregated first task execution results to the AF, so that the AF may determine the task processing result of the calculation task through statistical analysis of the first task execution results, send and feedback the task processing result of the calculation task to the UEs. After that, the calculation service process ends.

For the embodiments of the disclosure, as a possible implementation, in a case that the calculation task is executed in a distributed manner by a plurality of target UEs, the first network element may obtain a plurality of second task execution results after the plurality of target UEs execute the second calculation sub-tasks in the distributed manner, aggregate and send the plurality of second task execution results to the second network element, such that the second network element may store aggregated second task execution results. In addition, the second network element will also send the aggregated second task execution results to the AF, so that the AF may determine the task processing result of the calculation task through statistical analysis of the second task execution results, send and feed back the task processing result of the calculation task to the UEs. After that, the calculation service process ends.

For the embodiments of the disclosure, as a possible implementation, in a case that the calculation task is executed collaboratively by the network side and the UE side, the first network element may obtain one or more first task execution results after one or more first network elements execute one or more first calculation sub-tasks in the distributed manner and obtain one or more second task execution results after one or more target UEs execute one or more second calculation sub-tasks in the distributed manner. The first network element may aggregate the first task execution results and the second task execution results and send them to the second network element, such that the second network element may store them. In addition, the second network element may also send the aggregated first task execution results and the second task execution results to the AF, so that the AF may determine the task processing result of the calculation task through statistical analysis of the first task execution results and the second task execution results, send and feed back the task processing result of the calculation task to the UEs. After that, the calculation service process ends.

At step 404, the first task execution result(s) and/or the second task execution result(s) are analyzed to obtain the task processing result of the calculation task, and the task processing result of the calculation task is sent to the UEs.

In conclusion, with the task processing method according to the embodiments of the disclosure, the AF may send the task calculation request to the first network element in response to the calculation service requests sent by the UEs, so that the first network element divides the calculation task into the plurality of calculation sub-tasks based on the task information of the calculation task and the calculation resource information of the plurality of UEs carried in the task calculation request, thereby realizing the distributed execution of the plurality of calculation sub-tasks. In the technical solution of the disclosure, by sending the task calculation request to the first network element, it enables the first network element to divide the calculation task based on the task information and the calculation resource information, and distributed calculation may be performed on the network side and/or the UE side. This collaborative working method may more efficiently utilize various types of calculation resources, thereby better executing specific businesses or services.

FIG. 5 is a schematic flowchart of a task processing method according to an embodiment of the disclosure. As illustrated in FIG. 5, the method is performed by a UE, which may be a mobile phone, a notebook, a tablet computer, a POS machine, a vehicle-mounted computer, or other communication device, which is not limited in the disclosure. Embodiments may include the following.

At step 501, a calculation service request is sent to an AF via an AMF.

For the embodiments of the disclosure, the UE may send the calculation service request for triggering a calculation service process to the AMF via a RAN. The calculation service request includes calculation task requirement information and calculation resource information of the UE. The AMF may pass the calculation service request to the corresponding AF. The calculation task requirement information may include task information of the calculation task, such as data volume, a type and characteristics of the calculation task, which are not limited here. The calculation resource information may include maximum task processing resources of the UE, available task processing resources of the UE in a current state, and calculation and storage capabilities of the UE corresponding to the task processing resources, which are not limited here.

The calculation service request is configured to trigger the AF to send the task calculation request to the first network element. The task calculation request carries the task information of the calculation task and the calculation resource information of a plurality of UEs. The task calculation request is configured to instruct the first network element to divide the calculation task into a plurality of calculation sub-tasks to be executed in the distributed manner by first network element(s) and/or UE(s) based on the task information and the calculation resource information. The plurality of calculation sub-tasks include at least one of the following: one or more first calculation sub-tasks executed by one or more first network elements, in which the one or more first calculation sub-tasks are adapted to one or more task processing capabilities of the one or more first network elements; or at least one second calculation sub-task executed by at least one target UE among the plurality of UEs, in which the at least one second calculation sub-task is adapted to at least one task processing capability of the at least one target UE.

Accordingly, the first network element divides the calculation task into a plurality of calculation sub-tasks to be executed in the distributed manner in the following manners.

As a possible implementation, in a case where the first network element determines that the task attributes are suitable for execution on the network side based on the task information and the calculation resource information, the first network element may determine one or more task execution nodes (such as one or more first network elements) on the network side for executing the calculation task. In a case where a plurality of first network elements for executing the calculation task are determined on the network side, the calculation task may be divided into a plurality of first calculation sub-tasks to be executed in the distributed manner in accordance with the plurality of first network elements. Each first network element is configured to execute a respective part of the calculation task, namely, a respective first calculation sub-task.

As a possible implementation, in a case where the first network element determines that the task attributes are suitable for execution by UEs based on the task information and the calculation resource information, the first network element may determine one or more task execution nodes (such as one or more target UEs) for executing the calculation task from a plurality of UEs based on the calculation resource information of the plurality of UEs. In a case where the plurality of target UEs for executing the calculation task are determined on the network side, the calculation task may be divided into a plurality of second calculation sub-tasks to be executed in the distributed manner in accordance with the plurality of target UEs, and the second calculation sub-tasks may be sent to the target UEs for calculation. Each target UE is configured to execute a respective part of the calculation task.

As a possible implementation, in a case where the first network element determines that the task attributes are suitable for collaborative execution on the network side and the UEs based on the task information and the calculation resource information, the first network element may determine one or more task execution nodes (such as one or more first network elements) on the network side for executing the calculation task and determine one or more task execution nodes (such as one or more target UEs) from a plurality of UEs based on the calculation resource information of the plurality of UEs. Further, the first network element may divide the calculation task into one or more first calculation sub-tasks executed by the one or more first network elements and one or more second calculation sub-tasks executed by the one or more target UEs, such that one or more the first calculation sub-tasks are executed locally and the one or more second calculation sub-task are sent to the target UEs for calculation.

In conclusion, with the task processing method according to the embodiments of the disclosure, the UE may send the calculation service request to the AF, such that the AF responds to the calculation service request sent by the UE to send the task calculation request to the first network element. Further, the first network element may divide the calculation task into a plurality of calculation sub-tasks to be executed in a distributed manner by first network element(s) and/or UE(s) based on the task information of the calculation task and the calculation resource information of the UEs carried in the task calculation request. In the technical solution of the disclosure, the distributed execution of calculation task may be performed on the network side and/or the UE side by sending the calculation service request. This collaborative working method may more efficiently utilize various types of calculation resources, thereby better executing specific businesses or services.

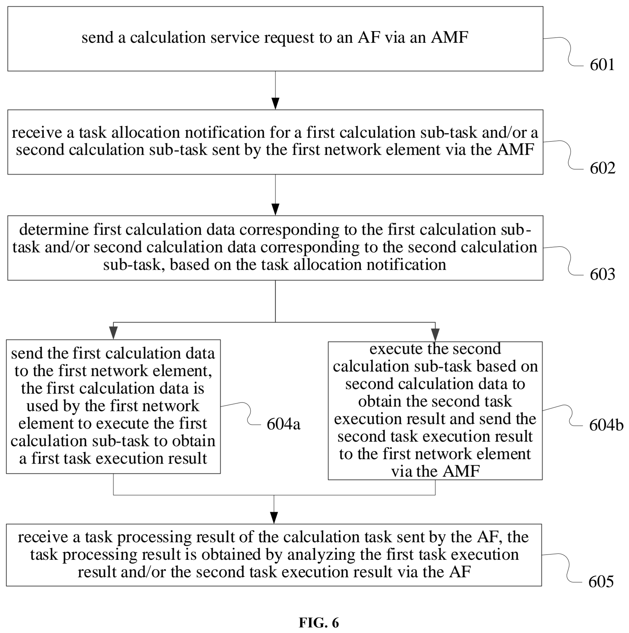

FIG. 6 is a schematic flowchart illustrating a task processing method according to an embodiment of the disclosure. As illustrated in FIG. 6, the method is performed by UEs. Embodiments may include the following.

At step 601, calculation service requests are sent to an AF via an AMF.

For the specific implementation process in the embodiments of the disclosure, reference may be made to the relevant description in step 501 of the embodiments, which will not be repeated here.

At step 602, a task allocation notification for first calculation sub-task(s) and/or second calculation sub-task(s) sent by the first network element via the AMF is received.

For the embodiments of the disclosure, after the first network element divides the calculation task into the first calculation sub-task(s) and/or the second calculation sub-task(s) to be executed in a distributed manner, the task allocation notification for the first calculation sub-task(s) and/or the second calculation sub-task(s) is sent to the UEs. In detail, the first network element may send the task allocation notification to the AMF, and use the AMF to send the task allocation notification to each UE via the RAN.

At step 603, first calculation data corresponding to the first calculation sub-task(s) and/or second calculation data corresponding to the second calculation sub-task(s) are determined based on the task allocation notification.

In a specific application scenario, as a possible implementation, the task allocation notification may contain a plurality of first calculation sub-tasks executed by a plurality of first network elements. In this case, the UEs may determine the first calculation data corresponding to the first calculation sub-tasks, and step 604a of the embodiments is executed to determine the first task execution results corresponding to the plurality of first calculation sub-tasks. As a possible implementation method, the task allocation notification may contain a plurality of second calculation sub-tasks executed by a plurality of target UEs. In this case, the UEs may determine the second calculation data corresponding to the second calculation sub-tasks, and step 604b of the embodiments is executed to determine the second task execution results corresponding to the plurality of second calculation sub-tasks. As a possible implementation, the task allocation notification may contain first calculation sub-tasks executed by first network elements and second calculation sub-tasks executed by target UEs. In this case, the UEs may determine first calculation data corresponding to the first calculation sub-tasks and second calculation data corresponding to the second calculation sub-tasks, and steps 604a and 604b of the embodiments are executed to determine the first task execution results corresponding to the plurality of first calculation sub-tasks and the second task execution results corresponding to the plurality of second calculation sub-tasks.

At step 604a, first calculation data is sent to the first network element(s). The first calculation data is used by the first network element(s) to execute the first calculation sub-task(s) to obtain the first task execution result(s).

For the embodiments of the disclosure, in a case that the task allocation notification contains the first calculation sub-tasks to be executed by the first network elements, after the UEs determines the first calculation data corresponding to the first calculation sub-tasks, the UEs may send the first calculation data that needs to be calculated within the network to the first network elements via the user plane, so that the first network elements execute the first calculation sub-tasks based on the first calculation data to obtain the first task execution results.

At step 604b corresponding to step 604a, second calculation sub-task(s) is/are executed based on the second calculation data to obtain second task execution result(s), and the second task execution result(s) is/are sent to the first network element via an AMF.

For the embodiments of the disclosure, after determining the second calculation data corresponding to the second calculation sub-tasks, the target UEs among a plurality of UEs may call local computation power to perform the calculation of the second calculation sub-tasks to obtain the second task execution results. After that, the target UEs may send the second task execution results to the AMF, and the AMF will feed back the second calculation results to the first network element in the network. Accordingly, the first network element may receive at least one second task execution result sent by at least one target UE via an AMF.

At step 605, the task processing result of the calculation task sent by the AF is received. The task processing result is obtained by analyzing the first task execution result(s) and/or the second task execution result(s) by the AF.

In a specific application scenario, in a case that the first network element obtains the first task execution results and/or the second task execution results, the first network element may send the aggregated task execution results to the AF via the second network element, so that the AF may determine the task processing result of the calculation task through statistical analysis of the task execution results, send and feed back the task processing result of the calculation task to the UEs. After that, the calculation service process ends. Correspondingly, the UEs may receive the task processing result of the calculation task sent by the AF.

In conclusion, with the task processing method according to the embodiments of the disclosure, the UEs may send the calculation service requests to the AF, so that the AF responds to the calculation service requests sent by the UE to send the task calculation request to the first network element. Therefore, the first network element divides the calculation task into a plurality of calculation sub-tasks based on the task information of the calculation task and the calculation resource information of the plurality of UEs carried in the task calculation request, thereby realizing distributed execution of the plurality of calculation sub-tasks. In the technical solution of the disclosure, by sending the task calculation request to the first network element, it enables the first network element to divide the calculation task based on the task information and the calculation resource information, and distributed calculation is performed on the network side and/or the UE side. This collaborative working method may more efficiently utilize various types of calculation resources, thereby better executing specific businesses or services.

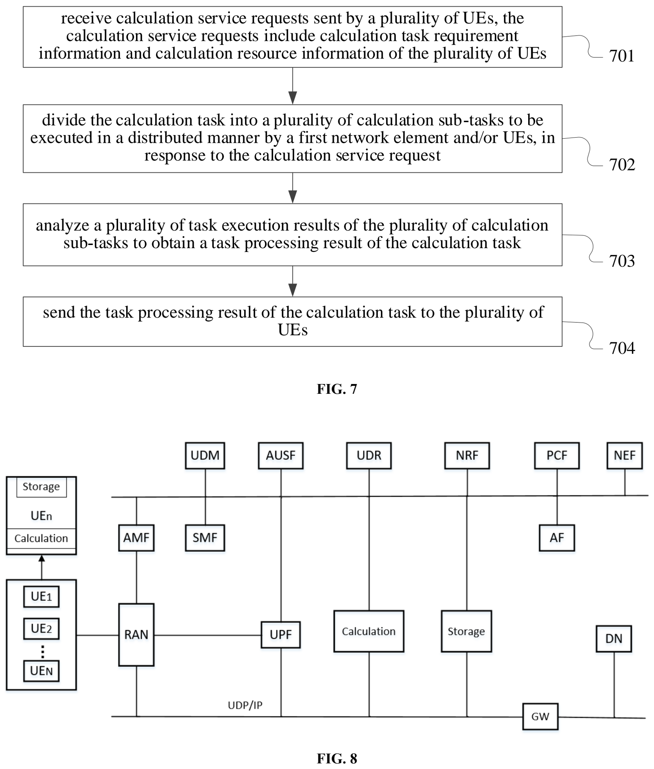

FIG. 7 is a schematic flowchart illustrating a task processing method according to an embodiment of the disclosure. As illustrated in FIG. 7, the method is performed by a core network, and as illustrated in FIG. 8, the 6G distributed calculation and storage separation network architecture corresponding to the core network may include: a plurality of UEs (UEn), an RAN, an AMF, a first (Calculation) network element, a second (Storage) network element, and an AF. In addition, the network architecture may also include: a session management function (SMF), a unified data management (UDM), a user plane function (UPF), an authentication server function (AUSF), a user data repository (UDR), a network repository function (NRF), a policy control function (PCF), a network exposure function (NEF), a data network (DN), a gateway (GW), or the like, which are not limited here. Embodiments may include the following.

At step 701, calculation service requests sent by UEs are received. The calculation service requests include calculation task requirement information and calculation resource information of the plurality of UEs.

In a specific application scenario, each UE may send the calculation service request for trigger a calculation service process to an AMF in the core network via an RAN. The calculation service request includes the calculation task requirement information and the calculation resource information of the UE. The AMF may pass the calculation service request to the corresponding AF in the core network. Correspondingly, for the embodiments of the disclosure, the AF may receive the calculation service requests sent by the UEs via the AMF. The calculation task requirement information may include task information of a calculation task, such as data volume, a type and characteristics of the calculation task, which are not limited here. The calculation resource information may include maximum task processing resources of UEs, available task processing resources of UEs in a current state, calculation and storage capabilities of UEs corresponding to task processing resources, which are not limited here.

At step 702, in response to the calculation service requests, the calculation task is divided into a plurality of calculation sub-tasks to be executed in a distributed manner by first network element(s) and/or UE(s).

For the embodiments of the disclosure, after receiving the calculation service requests sent by the UEs, the AF in the core network may further generate the task calculation request corresponding to the calculation service requests and send the task calculation request to the first network element. The task calculation request carries the task information of the calculation task and the calculation resource information of the UEs. The task calculation request is configured to instruct the first network element to divide the calculation task into a plurality of calculation sub-tasks to be executed in the distributed manner by first network element(s) and/or UE(s) based on the task information and the calculation resource information. For the specific implementation process, reference may be made to the relevant description in step 302 of the embodiments, which will not be repeated here.

At step 703, a plurality of task execution results of the plurality of calculation sub-tasks are analyzed to obtain a task processing result of the calculation task.

For the embodiments of the disclosure, the first network element may further divide the calculation task into the plurality of calculation sub-tasks to be executed in the distributed manner by first network element(s) and/or UE(s) based on the task information and the calculation resource information, determine the plurality of task execution results of the plurality of calculation sub-tasks, and send the plurality of task execution results to the AF via the second network element. For the specific implementation process, reference may be made to the relevant descriptions in steps 102 to 104 or steps 202 to 206 of the embodiments, which will not be repeated here. After receiving the first task execution result(s) and/or the second task execution result(s) sent by the first network element via the second network element, the AF may analyze the first task execution result(s) and/or the second task execution result(s) to obtain the task processing result of the calculation task. For the specific implementation process, reference may be made to the relevant descriptions in steps 403 to 404 of the embodiments, which will not be repeated here.

At step 704, the task processing result of the calculation task is sent to the UEs.

In conclusion, with the task processing method according to the embodiments of the disclosure, the core network may respond to the calculation service requests sent by the UEs and divide the calculation task into a plurality of calculation sub-tasks based on the task information of the calculation task and the calculation resource information of the UEs, such that the distributed execution of the plurality of calculation sub-tasks may be performed. In the technical solution of the disclosure, by sending the calculation service request to the core network, it enables the core network to divide the calculation task based on the task information and the calculation resource information, and distributed calculation may be performed on the network side and/or the UE side. This collaborative working method may more efficiently utilize various types of calculation resources, to better execute specific businesses or services.

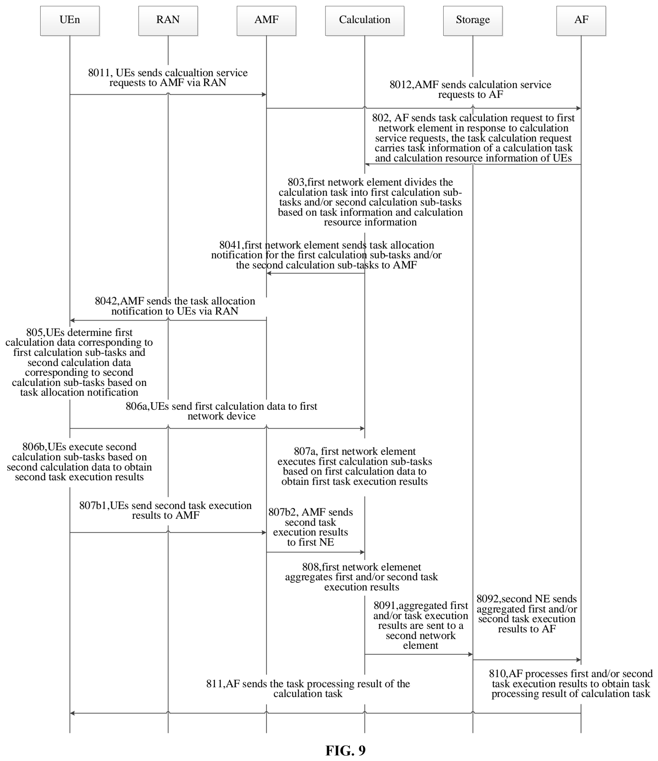

FIG. 9 is a timing diagram of a task processing method according to an embodiment of the disclosure. The method is performed by a 6G distributed calculation and storage separation network. Embodiments may include the following.

For the embodiments of the disclosure, the specific implementation process may be the following. The UEs send calculation service requests to the AF via the AMF. The AF responds to the calculation service requests to send a task calculation request to the first network element. The task calculation request carries the task information of the calculation task and the calculation resource information of UEs. The first network element divides the calculation task into first calculation sub-task(s) and/or second calculation sub-task(s) to be executed in the distributed manner based on the task information and the calculation resource information. The first network element sends a task allocation notification for the first calculation sub-task(s) and/or the second calculation sub-task(s) to the UEs via the AMF. The UEs determine the first calculation data corresponding to the first calculation sub-task(s) and/or the second calculation data corresponding to the second calculation sub-task(s) based on the task allocation notification. The UEs send the first calculation data to the first network elements, and the first network elements execute the first calculation sub-tasks based on the first calculation data to obtain the first task execution results. The UEs execute the second calculation sub-tasks based on the second calculation data to obtain the second task execution results. The UEs send the second task execution results to the first network element via the AMF. The first network element aggregates the first task execution results and/or the second task execution results. The first network element sends the first task execution results and/or the second task execution results to the AF via the second network element. The AF analyzes the first task execution results and/or the second task execution results to obtain the task processing result of the calculation task. The AF sends the task processing result of the calculation task to the UEs.

At step 801, the UEs send the calculation service requests to the AF via the AMF.

For the embodiments of the disclosure, each UE may send the calculation service request for triggering a calculation service process to the AMF via the RAN. The calculation service request includes calculation task requirement information and calculation resource information of the UE. The AMF may pass the calculation service request to the corresponding AF. The task requirement information may include task information of the calculation task, such as data volume, a type, and characteristics of the calculation task, which are not limited here. The calculation resource information may include maximum task processing resources of the UE, available task processing resources of the UE in a current state, calculation and storage capabilities of the UE corresponding to task processing resources, which are not limited here. Accordingly, step 801 of the embodiments may include: at 8011, sending by the UEs the calculation service requests to the AMF via the RAN, and 8012, passing by the AMF the calculation service requests to the AF.

At step 802, the AF sends the task calculation request to the first network element in response to the calculation service requests. The task calculation request carries task information of the calculation task and the calculation resource information of the plurality of UEs.

For the embodiments of the disclosure, after receiving the calculation service requests sent by the UEs, the AF may further generate the task calculation request corresponding to the calculation service requests and send the task calculation request to the first network element. The task calculation request carries the task information of the calculation task and the calculation resource information of the UEs. The task information may include data volume, a type and characteristics of the calculation task, which are not limited here. The calculation resource information may include maximum task processing resources of UEs, available task processing resources of UEs in a current state, calculation and storage capacities of UEs corresponding to the task processing resources, which are not limited here.

At step 803, the first network element divides the calculation task into first calculation sub-task(s) and/or second calculation sub-task(s) to be executed in a distributed manner based on the task information and the calculation resource information.

For the embodiments of the disclosure, the first network element may divide the calculation task into a plurality of calculation sub-tasks to be executed in the distributed manner by first network element(s) and/or UE(s) based on the task information and the calculation resource information.

The plurality of calculation sub-tasks include at least one of the following: one or more first calculation sub-tasks executed by one or more first network elements, in which the one or more first calculation sub-tasks are adapted to one or more task processing capabilities of the one or more first network elements; or at least one second calculation sub-task executed by at least one target UE among the plurality of UEs, in which the at least one second calculation sub-task is adapted to at least one task processing capability of the at least one target UE.

In a specific application scenario, the first network element may pre-store respective node characteristics of each task execution node (such as each network node and/or each UE). For example, the network node is suitable for executing a resource-intensive and computationally complex calculation task that has a high requirement for calculation resources, while the UE is suitable for executing a calculation task that has small data volume, simple calculation, and a low requirement for calculation resources. It should be noted that each task execution node may also include node characteristics for adaptively dividing the calculation task, which are not limited here. For the embodiments of the disclosure, the first network element may determine the task attributes and the task execution nodes that are suitable for executing the calculation task under the task attributes based on the task information and the calculation resource information and may divide the calculation task into a plurality of calculation sub-tasks to be executed in the distributed manner based on the task execution nodes. The calculation sub-tasks are respective parts of the calculation task, and the plurality of calculation sub-tasks constitute the complete calculation task. By dividing the calculation task into multiple calculation sub-tasks and executing the plurality of calculation sub-tasks simultaneously in the distributed manner, this collaborative working method may improve the efficiency of executing the calculation task and may allow the network nodes and massive UEs to fully exert their computation power value and to widely participate in calculation and storage, thereby effectively sharing the task pressure borne by the network, meeting specific task requirements to a certain extent, and reducing privacy and security risks.

Accordingly, the first network element divides the calculation task into the plurality of calculation sub-tasks to be executed in the distributed manner in the following manners.

As a possible implementation, in a case where the first network element determines that the task attributes are suitable for execution on the network side based on the task information and the calculation resource information, the first network element may determine one or more task execution nodes (such as one or more first network elements) on the network side for executing the calculation task. In a case where a plurality of first network elements are determined on the network side for executing the calculation task, the calculation task may be divided into a plurality of first calculation sub-tasks to be executed in the distributed manner in accordance with the plurality of first network elements. Each first network element is configured to execute a respective part of the calculation task, namely, a respective first calculation sub-task.

As a possible implementation, in a case where the first network element determines that the task attributes are suitable for execution by UEs based on the task information and the calculation resource information, the first network element may determine one or more task execution nodes (such as one or more target UEs) for executing the calculation task from the plurality of UEs based on the calculation resource information of the plurality of UEs. In a case where the plurality of target UEs for executing the calculation task are determined on the network side, the calculation task may be divided into a plurality of second calculation sub-tasks to be executed in the distributed manner in accordance with the target UEs. Each target UE is configured to execute a respective part of the calculation task.

As a possible implementation, in a case where the first network element determines that the task attributes are suitable for collaborative execution between the network side and the UEs based on the task information and the calculation resource information, the first network element may determine one or more task execution nodes (such as one or more first network elements) for executing the calculation task on the network side and determine one or more task execution nodes (such as one or more target UEs) for executing the calculation task from the plurality of UEs based on the calculation resource information of the plurality of UEs. Further, the first network element may divide the calculation task into one or more first calculation sub-tasks executed by the one or more first network elements and one or more second calculation sub-tasks executed by the one or more target UEs.

At step 804, the first network element sends a task allocation notification for the first calculation sub-task(s) and/or the second calculation sub-task(s) to the plurality of UEs via the AMF.

For the embodiments of the disclosure, after the first network element divides the calculation task into the first calculation sub-task(s) and/or the second calculation sub-task(s) to be executed in the distributed manner, the first network element may further send the task allocation notification for the first calculation sub-task(s) and/or the second calculation sub-tasks to the plurality of UEs. In detail, the first network element may send the task allocation notification to the AMF, and use the AMF to send the task allocation notification to each UE via the RAN. Accordingly, the step 804 of the embodiments may include: at 8041, sending by the first network element the task allocation notification for the first calculation sub-task(s) and/or the second calculation sub-task(s) to the AMF, and at 8042, sending by the AMF the task allocation notification to each UE via the RAN.

At step 805, the UEs determine first calculation data corresponding to the first calculation sub-task(s) and/or second calculation data corresponding to the second calculation sub-task(s) based on the task allocation notification.

In a specific application scenario, as a possible implementation, the task allocation notification may contain a plurality of first calculation sub-tasks executed by a plurality of first network elements. In this case, the UEs may determine the first calculation data corresponding to the first calculation sub-tasks, and steps 806a and 808a of the embodiments are executed to determine the first task execution results corresponding to the plurality of first calculation sub-tasks. As a possible implementation, the task allocation notification may contain a plurality of second calculation sub-tasks executed by a plurality of target UEs. In this case, the UEs may determine the second calculation data corresponding to the second calculation sub-tasks, and steps 806b and 808b of the embodiments are executed to determine the second task execution results corresponding to the plurality of second calculation sub-tasks. As a possible implementation, the task allocation notification may include first calculation sub-tasks executed by first network elements and second calculation sub-tasks executed by target UEs. In this case, the UEs may determine the first calculation data corresponding to the first calculation sub-tasks and the second calculation data corresponding to the second calculation sub-tasks, and steps 806a and 808a of the embodiments and steps 806b and 808b of the embodiments are synchronously executed to determine the first task execution results corresponding to the plurality of first calculation sub-tasks and the second task execution results corresponding to the plurality of second calculation sub-tasks.

At 806a, the UEs sends first calculation data to the first network elements.

For the embodiments of the disclosure, in a case where the task allocation notification contains first calculation sub-tasks to be executed in the distributed manner by the first network element, after determining the first calculation data corresponding to the first calculation sub-tasks, the UEs may send the first calculation data that needs to be calculated within the network to the first network elements via the user plane, so that the first network elements execute the first calculation sub-tasks based on the first calculation data to obtain the first task execution results.

At 807a, the first network elements execute the first calculation sub-tasks based on the first calculation data to obtain the first task execution results.

At step 806b corresponding to step 806a of the embodiments, the UEs perform second calculation sub-tasks based on the second calculation data to obtain second task execution results.

At step 807b, the UEs send the second task execution results to the first network element via the AMF.

For the embodiments of the disclosure, after the second calculation data corresponding to the second calculation sub-tasks are determined, the target UEs among the plurality of UEs may call local computation power to perform the calculation of the second calculation sub-tasks to obtain the second task execution results. The target UEs may send the second task execution results to the AMF, and the AMF will feed back the second calculation results to the first network element in the network. Accordingly, step 807b of the embodiments may include: at 807b1, sending by the UEs the second task execution results to the AMF; and at 807b2, feeding back by the AMF the second calculation result to the first network element in the network.

At step 808, the first network element aggregates the first task execution results and/or the second task execution results.

At step 809, the first network element sends the first task execution results and/or the second task execution results to the AF via the second network element.

For the embodiments of the disclosure, the step 809 of the embodiments may include: at 8091, sending the aggregated first task execution results and/or second task execution results to the second network element; and at 8092, sending by the second network element the aggregated first task execution results and/or second task execution results to the AF.

At step 810, the AF analyzes the first task execution results and/or the second task execution results to obtain the task processing result of the calculation task.

At step 811, the AF sends the task processing result of the calculation task to the UEs.

In conclusion, with the task processing method according to the embodiments of the disclosure, after receiving the task calculation request sent by the AF, the first network element may divide the calculation task into a plurality of calculation sub-tasks to be executed in the distributed manner based on the task information of the calculation task and the calculation resource information of the plurality of UEs carried in the task calculation request. The plurality of task execution results of the plurality of calculation sub-tasks are determined, and the plurality of task execution results are sent to the AF via the second network element. In the technical solution of disclosure, distributed calculation may be performed on the network side and/or the UE side by dividing the calculation task based on the task information and the calculation resource information. This collaborative working method may more efficiently utilize various types of calculation resources, thereby better executing specific businesses or services.

In the above embodiments according to the disclosure, the methods according to the embodiments of the disclosure are introduced from the perspectives of the first network element, the AF, and the UE. In order to implement the functions in the methods according to the above embodiments of the disclosure, the first network element, the AF, and the UEs may each include a hardware structure and a software module and implement the above functions in the form of a hardware structure, a software module, or a hardware structure plus a software module. One of the above functions may be executed in the form of a hardware structure, a software module, or a hardware structure plus a software module.

Corresponding to the task processing methods according to the above-mentioned embodiments, the disclosure also provides task processing devices. Since the task processing devices according to the embodiments of the disclosure correspond to the task processing methods according to the above-mentioned embodiments, the implementations of the task processing methods are also applicable to the task processing devices according to the embodiments and will not be described in detail in these embodiments.

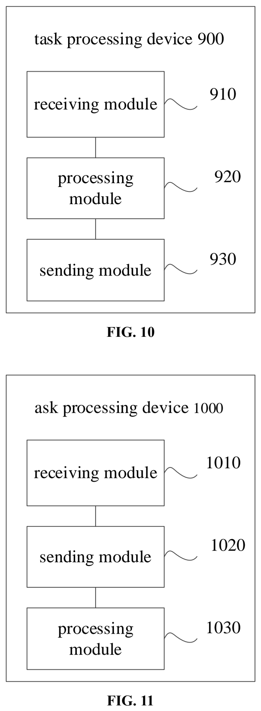

FIG. 10 is a schematic diagram illustrating the structure of a task processing device 900 according to an embodiment of the disclosure. The task processing device 900 may be applied to a first network element.

As illustrated in FIG. 10, the device 900 may include the following.

A receiving module 910 is configured to receive a task calculation request sent by an AF. The task calculation request carries task information of a calculation task and calculation resource information of a plurality of UEs.

A processing module 920 configured to divide the calculation task into a plurality of calculation sub-tasks to be executed in a distributed manner by first network elements and/or UEs based on the task information and the calculation resource information.

The processing module 920 may further be configured to determine a plurality of task execution results of the plurality of calculation sub-tasks.

A sending module 930 may be configured to send the plurality of task execution results to the AF via a second network element.

In some embodiments of the disclosure, the plurality of calculation sub-tasks include at least one of the following:
first calculation sub-task(s) executed by first network element(s), in which each first calculation sub-task is adapted to a task processing capability of a respective first network element; or
second calculation sub-task(s) executed by at least one target UE among the plurality of UEs, in which the second calculation sub-task(s) is/are adapted to task processing capability/capabilities of the at least one target UE.

In some embodiments of the disclosure, the processing module 920 may also be configured to determine at least one target UE for executing the calculation in the distributed manner from the plurality of UEs based on the calculation resource information of the plurality of UEs.

In some embodiments of the disclosure, the processing module 920 may be configured to execute the first calculation sub-task(s) based on first calculation data to obtain first task execution result(s), in which the first calculation data corresponds to the first calculation sub-task(s); and/or receive second task execution result(s) sent by at least one target UE via the AMF, in which the second task execution result(s) is/are obtained after at least one target UE executes the second calculation sub-task(s) based on the second calculation data, and the second calculation data corresponds to the second calculation sub-task(s).

In some embodiments of the disclosure, the sending module 930 may also be configured to send a task allocation notification for the first calculation sub-task(s) and/or the second calculation sub-task(s) to the plurality of UEs via the AMF.

In some embodiments of the disclosure, the receiving module 910 may also be configured to receive first calculation data sent by the plurality of UEs, in which the first calculation data is determined by the plurality of UEs based on the task allocation notification.

In some embodiments of the disclosure, the sending module 930 may also be configured to send the first task execution result(s) and/or the second task execution result(s) to the AF via the second network element.

FIG. 11 is a schematic diagram illustrating a structure of a task processing device 1000 according to an embodiment of the disclosure. The task processing device 1000 may be applied to an AF.

As illustrated in FIG. 11, the device 1000 may include the following.

A receiving module 1010 may be configured to receive calculation service requests sent by a plurality of UEs via an AMF, in which the calculation service requests include calculation task requirement information and calculation resource information of the plurality of UEs.

A sending module 1020 may be configured to send a task calculation request to the first network element in response to the calculation service requests. The task calculation request carries task information of a calculation task and calculation resource information of the plurality of UEs. The task calculation request is configured to instruct the first network element to divide the calculation task into a plurality of calculation sub-tasks to be executed in a distributed manner by first network element(s) and/or UE(s) based on the task information and the calculation resource information.

In some embodiments of the disclosure, the plurality of calculation sub-tasks include at least one of the following:
first calculation sub-task(s) executed by the first network element(s), in which the first calculation sub-task(s) are adapted to task processing capability/capabilities of the first network element(s); or
second calculation sub-task(s) executed by at least one target UE among the plurality of UEs, in which the second calculation sub-task(s) is/are adapted to at least one task processing capability of the at least one target UE.

In some embodiments of the disclosure, the receiving module 1010 may also be configured to receive first task execution result(s) and/or second task execution result(s) sent by the first network element via the second network element. The first task execution result(s) is/are obtained after the first network element(s) execute the first calculation sub-task(s) based on the first calculation data. The first calculation data corresponds to the first calculation sub-task(s). At least one second task execution result is obtained after at least one target UE executes at least one second calculation sub-task based on the second calculation data. The second calculation data corresponds to the at least one second calculation sub-task.

In some embodiments of the disclosure, as illustrated in FIG. 11, the device 1000 may further include a processing module 1030.

The processing module 1030 may be configured to analyze the first task execution result(s) and/or the second task execution result(s) to obtain a task processing result of the calculation task.

In some embodiments of the disclosure, the sending module 1020 may also be configured to send the task processing result of the calculation task to the UEs.

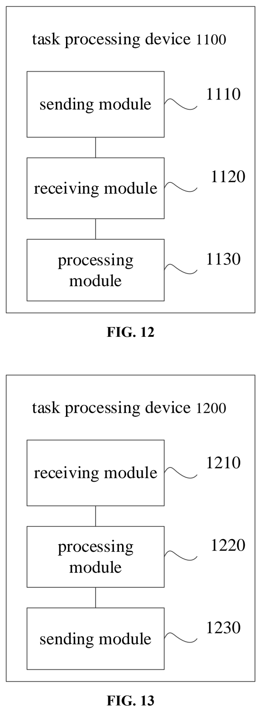

FIG. 12 is a schematic diagram illustrating a structure of a task processing device 1100 according to an embodiment of the disclosure. The task processing device 1100 may be applied to a UE.

As illustrated in FIG. 12, the device 1100 may include the following.

A sending module 1110 may be configured to send a calculation service request to an AF via an AMF.

The calculation service request is configured to trigger the AF to send a task calculation request to the first network element. The task calculation request carries task information of a calculation task and calculation resource information of a plurality of UEs. The task calculation request is configured to instruct the first network element to divide the calculation task into a plurality of calculation sub-tasks to be executed in a distributed manner by first network element(s) and/or UE(s) based on the task information and the calculation resource information.

In some embodiments of the disclosure, the plurality of calculation sub-tasks include at least one of the following:
first calculation sub-task(s) executed by the first network element(s), in which the first calculation sub-task(s) adapted to task processing capability/capabilities of the first network element(s); or
at least one second calculation sub-task executed by at least one target UE among the plurality of UEs, in which the at least one second calculation sub-task is adapted to at least one task processing capability of the at least one target UE.

In some embodiments of the disclosure, as illustrated in FIG. 12, the device 1100 may further include a receiving module 1120.

The receiving module 1120 may be configured to receive a task allocation notification for the first calculation sub-task(s) and/or the second calculation sub-task(s) sent by the first network element via the AMF.

In some embodiments of the disclosure, as illustrated in FIG. 12, the device 1100 may further include a processing module 1130.

The processing module 1130 may be configured to determine first calculation data corresponding to the first calculation sub-task(s) and/or second calculation data corresponding to the second calculation sub-task(s) based on the task allocation notification.

In some embodiments of the disclosure, the sending module 1110 may also be configured to send the first calculation data to the first network element(s), in which the first calculation data is used by the first network element(s) to execute the first calculation sub-task(s) to obtain the first task execution result(s).

In some embodiments of the disclosure, the processing module 1130 may be configured to execute a second calculation sub-task based on the second calculation data to obtain a second task execution result. The sending module 1110 may also be configured to send the second task execution result to the first network element via the AMF.

In some embodiments of the disclosure, the receiving module 1120 may be configured to receive a task processing result of the calculation task sent by the AF. The task processing result is obtained by the AF analyzing the first task execution result(s) and/or the second task execution result(s).

FIG. 13 is a schematic diagram illustrating a structure of a task processing device 1200 according to an embodiment of the disclosure. The task processing device 1200 may be applied to a core network.

As illustrated in FIG. 13, the device 1200 may include the following.

A receiving module 1210 may be configured to receive calculation service requests sent by a plurality of UEs. The calculation service requests include calculation task requirement information and calculation resource information of the plurality of UEs.

A processing module 1220 may be configured to divide the calculation task into a plurality of calculation sub-tasks to be executed in a distributed manner by first network element(s) and/or UE(s) in response to the calculation service request.

The processing module 1220 may be configured to analyze a plurality of task execution results of the plurality of calculation sub-tasks to obtain a task processing result of the calculation task.

A sending module 1230 may be configured to send the task processing result of the calculation task to the UEs.

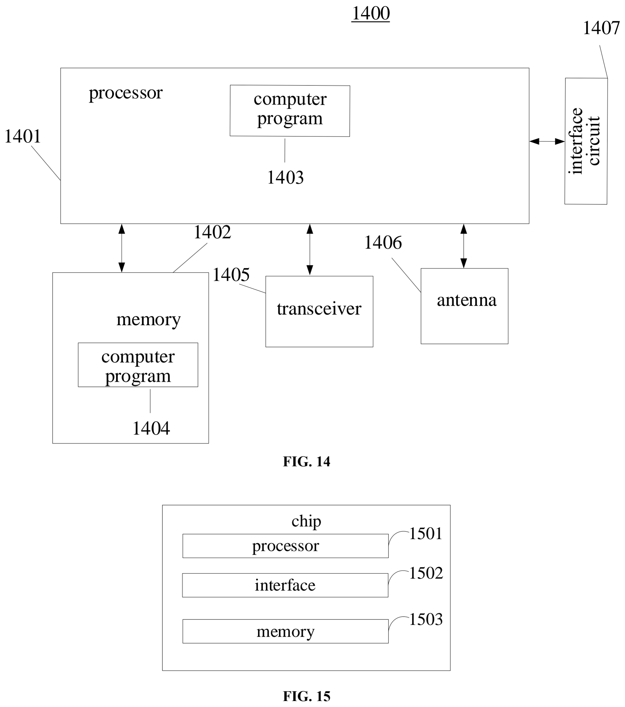

FIG. 14 is a schematic diagram illustrating the structure of a communication device 1400 according to an embodiment of the disclosure. The communication device 1400 may be a network device or a UE. Or the communication device 1400 may be a chip, a chip system or a processor that supports the network device to implement the above methods. Or the communication device 1400 may be a chip, a chip system or a processor that supports the UE to implement the above methods. The device may be used for implementing the methods described in the above method embodiments. For details, reference may be made to the description in the above method embodiments.

The communication device 1400 may include one or more processors 1401. The processor 1401 may be a general-purpose processor or a dedicated processor, etc. For example, it may be a baseband processor or a central processing unit. The baseband processor may be used to process the communication protocol and communication data, while the central processing unit may be used to control the communication device (such as a base station, a baseband chip, a UE, a terminal, chip, a DU, a CU, or the like), execute a computer program, and process the data of the computer program.

For example, the communication device 1400 may further include one or more memories 1402, on which a computer program 1404 may be stored. The processor 1401 executes the computer program 1404, such that the communication device 1400 performs the methods described in the above method embodiments. For example, data may also be stored in the memory 1402. The communication device 1400 and the memory 1402 may be provided separately or integrated together.

For example, the communication device 1400 may further include a transceiver 1405 and an antenna 1406. The transceiver 1405 may be referred to as a transceiver unit, a transceiver machine or a transceiver circuit, and is used to implement a transceiver function. The transceiver 1405 may include a receiver and a transmitter. The receiver may be referred to as a receiver machine or a receiving circuit and is used to implement a receiving function. The transmitter may be referred to as a transmitter machine or a transmitting circuit and is used to implement a transmitting function.

For example, the communication device 1400 may further include one or more interface circuits 1407. The interface circuit 1407 is used to receive code instructions and transmit the code instructions to the processor 1401. The processor 1401 executes the code instructions to enable the communication device 1400 to implement the methods described in the above method embodiments.

In one implementation, the processor 1401 may include a transceiver for implementing receiving and sending functions. For example, the transceiver may be a transceiver circuit, an interface, or an interface circuit. The transceiver circuit, interface, or interface circuit for implementing the receiving and sending functions may be separate or integrated. The above-mentioned transceiver circuit, interface or interface circuit may be used for reading and writing code/data, or the above-mentioned transceiver circuit, interface or interface circuit may be used for transmitting or delivering signals.

In one implementation, the processor 1401 may store a computer program 1403, which runs on the processor 1401 and enables the communication device 1400 to perform the methods described in the above method embodiments. The computer program 1403 may be fixed in the processor 1401, in which case the processor 1401 may be implemented by hardware.

In one implementation, the communication device 1400 may include a circuit that may implement the functions of sending or receiving or communicating in the aforementioned method embodiments. The processor and transceiver described in the disclosure may be implemented in an integrated circuit (IC), an analog IC, a radio frequency integrated circuit (RFIC), a mixed signal IC, an application specific integrated circuit (ASIC), a printed circuit board (PCB), an electronic device, or the like. The processor and transceiver may also be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), or the like.

The communication device described in the above embodiments may be a network device or a UE, but the scope of the communication device described in the disclosure is not limited thereto, and the structure of the communication device may not be limited by FIG. 14. The communication device may be an independent device or may be part of a larger device. For example, the communication device may be:
(1) an independent IC, a chip, a chip system or subsystem;
(2) a set of one or more ICs, and for example the IC set may also include a storage component for storing data and computer programs;
(3) an ASIC, such as a modem;
(4) a module that may be embedded in other devices;
(5) a receiver, a UE, an intelligent UE, a cellular phone, a wireless device, a handheld device, a mobile unit, a vehicle-mounted device, a network device, a cloud device, an artificial intelligence device, or the like;
(6) Others.

For the case where the communication device may be a chip or a chip system, reference may be made to the schematic diagram of the structure of a chip illustrated in FIG. 15. The chip illustrated in FIG. 15 includes a processor 1501 and an interface 1502. The number of processors 1501 may be one or more, and the number of interfaces 1502 may be multiple.

For example, the chip further includes a memory 1503. The memory 1503 is used to store necessary computer programs and data.

Those skilled in the art may also understand that the various illustrative logical blocks and steps listed in the embodiments of the disclosure may be implemented by electronic hardware, computer software, or a combination of the two. Whether such functions are implemented by hardware or software depends on the specific application and the design requirements of the entire system. Those skilled in the art may use various methods to implement the functions for each specific application, but such implementation should not be understood as exceeding the scope of protection of the embodiments of the disclosure.

The disclosure also provides a readable storage medium having instructions stored thereon. The functions of any of the above method embodiments are implemented when the instructions are executed by a computer.

The disclosure also provides a computer program product. The functions of any of the above method embodiments are implemented when the computer program product is executed by a computer.

The above embodiments may be implemented in whole or in part by software, hardware, firmware or any combination thereof. When implemented using software, they may be implemented in whole or in part in the form of a computer program product. The computer program product includes one or more computer programs. When the computer program is loaded and executed on a computer, the processes or functions according to the embodiments of the disclosure are generated in whole or in part. The computer may be a general-purpose computer, a special-purpose computer, a computer network, or other programmable device. The computer program may be stored in a computer-readable storage medium or transmitted from one computer-readable storage medium to another computer-readable storage medium. For example, the computer program may be transmitted from a website site, computer, server or data center by wired (e.g., coaxial cable, optical fiber, digital subscriber line (DSL)) or wireless (e.g., infrared, wireless, microwave, or the like) mode to another website site, computer, server or data center. The computer-readable storage medium may be any available medium that a computer may access or may be a data storage device, such as a server or a data center, that contains one or more available media integrated. Available media may be magnetic media (e.g., floppy disks, hard disks, tapes), optical media (e.g., digital video discs (DVDs)), or semiconductor media (e.g., solid state disks (SSDs)).

The disclosure provides task processing methods and apparatuses, which may solve a problem of resource collision and missing of beam measurement when the sidelink is used for transmitting beam management signals.

Based on the disclosure, the embodiments of the solution are as follows.
(1) The UEs send calculation service requests to the AMF via the RAN. The request for triggering the calculation service process includes calculation task requirement information and UE calculation resource information.
(2) AMF passes the calculation service requests to the corresponding AF.
(3) AF analyzes the service requests and sends a calculation request to the Calculation network element. The request information includes the data volume, type and characteristics of the calculation task, as well as the user's calculation resource information.
(4) The Calculation network element divides the calculation task into tasks based on the task information. For a resource-intensive task with high calculation complexity, the calculation is performed within the network. For a task with small data volume, the task is sent to the UE side for calculation. The tasks are sent based on the calculation and storage capabilities of each UE, and UEs with more abundant calculation resources are given priority. There is no need to allocate the task to all UEs.
(5) The Calculation NE sends a calculation task allocation notification to the AMF.
(6)AMF sends the tasks to respective UEs through RAN.
(7) Each UE aggregates the calculation task and sends the data that needs to be calculated within the network to the Calculation network element through the user plane.
(8) The Calculation network element receives the calculation data and performs the task calculation within the network.
(9) Each UE executes its respective task issued and calls local computation power for calculation.
(10) Each UE sends its respective calculation result to the AMF.
(11) AMF feeds back the calculation results to the Calculation network element in the network.
(12) The Calculation network element aggregates local calculation results and the calculation results of the UE side.
(13) The Calculation NE sends the aggregated calculation results to the Storage network element for storage.
(14) The Storage network cell sends all calculation results to the AF.
(15) AF performs statistical analysis on the calculation results and feeds an analysis result back to UE. The calculation service process ends.

In conclusion, the disclosure has the following beneficial technical effects: by dividing the calculation task based on task information and calculation resource information, distributed calculation may be performed on the network side and the terminal side. This collaborative working method may more efficiently utilize various types of calculation resources, thereby better executing specific businesses or services.

The embodiments or examples of the disclosure are not exhaustive, but are only illustrative of some embodiments or examples, and are not intended to be specific limitations on the scope of protection of the disclosure. Without contradiction, each step in a certain embodiment or example can be implemented as an independent example, and the steps may be combined arbitrarily. For example, the scheme after removing some steps in a certain embodiment or example may also be implemented as an independent example, and the order of the steps in a certain embodiment or example may be arbitrarily exchanged. In addition, the optional methods or optional examples in a certain embodiment or example may be combined arbitrarily. Furthermore, the various embodiments or examples may be combined arbitrarily. For example, some or all steps of different embodiments or examples may be combined arbitrarily, and a certain embodiment or example may be combined arbitrarily with the optional methods or optional examples of other embodiments or examples.

In some implementation schemes or examples, "in response to ...", "in a case where...", "at a time of ...", "when ...", "if ...", "in a case of ..." in the disclosure may be used interchangeably.

In some embodiments or examples, the terms of the disclosure, such as "A or B", "A and/or B", "at least one of A and B", "performing A in one case, and performing B in another case", "performing A in response to one case, and performing B in response to another case", may include at least one of the following technical solutions according to the situation: performing A independently of B (that is, performing A in some embodiments or examples); performing B independently of A (that is, performing B in some embodiments or examples); selectively performing A and B (that is, selectively performing A and B in some embodiments or examples); performing both A and B (that is, performing A and B in some embodiments or examples).

In some embodiments or examples, "including A", "comprising A", "used to indicate A" and "carrying A" in the disclosure may be interpreted as directly carrying A or indirectly indicating A.

In addition, each element, each row, or each column in the table involved in the disclosure may be implemented as an independent embodiment, and the combination of any elements, any rows, and any columns may also be implemented as an independent embodiment.

A person skilled in the art may understand that various numerical numbers such as "first" and "second" involved in the disclosure are only used for convenience of description and are not used to limit the scope of embodiments of the disclosure, and they also indicate an order of precedence.

"At least one" in the disclosure may also be described as one or more, and "a plurality of" may be two, three, four or more, which is not limited in the disclosure. In the embodiments of the disclosure, for a kind of technical feature, technical features are distinguished with each other by "first", "second", "third", "A", "B", "C", "D", or the like, and there is no order of precedence or size between the technical features described by the "first", "second", "third", "A", "B", "C" and "D".

As used herein, the terms "machine-readable medium" and "computer-readable medium" refer to any computer program product, apparatus and/or device (e.g., disk, optical disk, memory, programmable logic device (PLD)) for providing machine instructions and/or data to a programmable processor, including a machine-readable medium that receives machine instructions as a machine-readable signal. The term "machine-readable signal" refers to any signal for providing machine instructions and/or data to a programmable processor.

The systems and techniques described herein may be implemented in a calculation system that includes back-end components (e.g., as a data server), a calculation system that includes middleware components (e.g., an application server), a calculation system that includes front-end components (e.g., a user computer with a graphical user interface or a web browser through which a user may interact with implementations of the systems and techniques described herein), or a calculation system that includes any combination of such back-end components, middleware components, or front-end components. The components of the system may be interconnected by any form or medium of digital data communication (e.g., a communications network). Examples of communications networks include: a local area network (LAN), a wide area network (WAN), and the Internet.

A computer system may include clients and servers. Clients and servers are generally remote from each other and usually interact through a communication network. A relationship between the client and the server is generated by computer programs running on respective computers and having a client-server relationship to each other.

It should be understood that the various forms of processes illustrated above may be used to reorder, add or delete steps. For example, the steps in the disclosure may be executed in parallel, sequentially or in different orders, as long as the desired results of the technical solutions disclosed in the disclosure may be achieved, and the above is not limited in the disclosure.

In addition, it should be understood that the various embodiments of the disclosure may be implemented individually or in combination with other embodiments when the solution permits.

Those of ordinary skill in the art will appreciate that the units and algorithm steps of each example described in conjunction with the embodiments disclosed herein may be implemented in electronic hardware, or a combination of computer software and electronic hardware. Whether these functions are performed in hardware or software depends on the specific application and design constraints of the technical solution. Professional and technical personnel may use different methods to implement the described functions for each specific application, but such implementation should not be considered to be beyond the scope of the disclosure.

Those skilled in the art may clearly understand that, for the purpose of the convenience and brevity of description, for the specific working processes of the systems, devices and units described above, reference may be made to the corresponding processes in the aforementioned method embodiments and will not be repeated here.

The above are only specific implementations of the disclosure, but the protection scope of the disclosure is not limited thereto. Any technician familiar with the technical field may easily think of changes or substitutions within the technical scope of the disclosure, which should be included in the protection scope of the disclosure. Therefore, the protection scope of the disclosure should be based on the protection scope of the claims.

## Claims

1. A task processing method, performed by a first network element, the method comprising:
receiving a task calculation request sent by an application function (AF), wherein the task calculation request carries task information of a calculation task and calculation resource information of a plurality of user equipment (UE);
dividing the calculation task into a plurality of calculation sub-tasks to be executed in a distributed manner by the first network element and/or UEs, based on the task information and the calculation resource information;
determining a plurality of task execution results of the plurality of calculation sub-tasks; and
sending the plurality of task execution results to the AF via a second network element.

2. The method of claim 1, wherein the plurality of calculation sub-tasks comprises at least one of:
a first calculation sub-task executed by the first network element, wherein the first calculation sub-task is adapted to a task processing capability of the first network element; or
at least one second calculation sub-task executed by at least one target UE among the plurality of UEs, wherein the at least one second calculation sub-task is adapted to at least one task processing capability of the at least one target UE.

3. The method of claim 2, further comprising:
determining the at least one target UE for executing the calculation task in the distributed manner among the plurality of UEs based on the calculation resource information of the plurality of UEs.

4. The method of claim 2, wherein determining the plurality of task execution results of the plurality of calculation sub-tasks comprises:
executing the first calculation sub-task based on first calculation data to obtain a first task execution result, wherein the first calculation data corresponds to the first calculation sub-task; and/or
receiving at least one the second task execution result sent by the at least one target UE via an access and mobility management function (AMF), wherein the at least one second task execution result is obtained after the at least one target UE executes the at least one second calculation sub-task based on second calculation data, and the second calculation data corresponds to the at least one second calculation sub-task.

5. The method of claim 4, further comprising:
sending a task allocation notification for the first calculation sub-task and/or the at least one second calculation sub-task to the plurality of UEs via the AMF.

6. The method of claim 5, further comprising:
receiving the first calculation data sent by the plurality of UEs, wherein the first calculation data is determined by the plurality of UEs based on the task allocation notification.

7. The method of claim 4, wherein sending the plurality of task execution results to the AF comprises:
sending the first task execution result and/or the at least one second task execution result to the AF via the second network element.

8. A task processing method, performed by an application function (AF), the method comprising:
receiving calculation service requests sent by a plurality of user equipment (UE) via an access and mobility management function (AMF), wherein the calculation service requests comprise calculation task requirement information and calculation resource information of the plurality of UEs;
sending a task calculation request to a first network element in response to the calculation service request, wherein the task calculation request carries task information of a calculation task and the calculation resource information of the plurality of UEs, and the task calculation request is configured to instruct the first network element to divide the calculation task into a plurality of calculation sub-tasks to be executed in a distributed manner by the first network element and/or UEs based on the task information and the calculation resource information.

9. The method of claim 8, wherein the plurality of calculation sub-tasks comprise at least one of the following:
a first calculation sub-task executed by the first network element, wherein the first calculation sub-task is adapted to a task processing capability of the first network element; or
at least one second calculation sub-task executed by at least one target UE among the plurality of UEs, wherein the at least one second calculation sub-task is adapted to at least one task processing capability of the at least one target UE.

10. The method of claim 9, further comprising:
receiving a first task execution result and/or at least one second task execution result sent by the first network element via a second network element;
wherein the first task execution result is obtained after the first network element executes the first calculation sub-task based on first calculation data, the first calculation data corresponds to the first calculation sub-task; the at least one second task execution result is obtained after the at least one target UE executes the at least one second calculation sub-task based on second calculation data, and the second calculation data corresponds to the at least one second calculation sub-task.

11. The method of claim 10, further comprising:
analyzing the first task execution result and/or the at least one second task execution result to obtain a task processing result of the calculation task.

12. The method of claim 11, further comprising:
sending the task processing result of the calculation task to the plurality of UEs.

13. A task processing method, performed by a user equipment (UE), the method comprising:
sending a calculation service request to an application function (AF) via an access and mobility management function (AMF);
wherein the calculation service request is configured to trigger the AF to send a task calculation request to a first network element, the task calculation request carries task information of a calculation task and calculation resource information of a plurality of UEs, and the task calculation request is configured to instruct the first network element to divide the calculation task into a plurality of calculation sub-tasks to be executed in a distributed manner by the first network element and/or UEs based on the task information and the calculation resource information.

14. The method of claim 13, wherein the plurality of calculation sub-tasks comprise at least one of the following:
a first calculation sub-task executed by the first network element, wherein the first calculation sub-task is adapted to a task processing capability of the first network element; or
at least one second calculation sub-task executed by at least one target UE among the plurality of UEs, wherein the at least one second calculation sub-task is adapted to at least one task processing capability of the at least one target UE.

15. The method of claim 13, further comprising:
receiving a task allocation notification for a first calculation sub-task and/or a second calculation sub-task sent by the first network element via the AMF.

16. The method of claim 15, further comprising:
determining first calculation data corresponding to the first calculation sub-task and/or second calculation data corresponding to the second calculation sub-task, based on the task allocation notification.

17. The method of claim 16, further comprising:
sending the first calculation data to the first network element, wherein the first calculation data is used by the first network element to execute the first calculation sub-task to obtain a first task execution result.

18. The method of claim 17, further comprising:
executing the second calculation sub-task based on second calculation data to obtain the second task execution result; and
sending the second task execution result to the first network element via the AMF.

19. The method of claim 18, further comprising:
receiving a task processing result of the calculation task sent by the AF, wherein the task processing result is obtained by analyzing the first task execution result and/or the second task execution result via the AF.

20. A task processing method, performed by a core network, the method comprising:
receiving calculation service requests sent by a plurality of user equipment (UE), wherein the calculation service requests comprise calculation task requirement information and calculation resource information of the plurality of UEs;
dividing the calculation task into a plurality of calculation sub-tasks to be executed in a distributed manner by a first network element and/or UEs, in response to the calculation service request;
analyzing a plurality of task execution results of the plurality of calculation sub-tasks to obtain a task processing result of the calculation task; and
sending the task processing result of the calculation task to the plurality of UEs.

21. A task processing device, applied to a first network element, the device comprising:
a receiving module, configured to receive a task calculation request sent by an application function (AF), wherein the task calculation request carries task information of a calculation task and calculation resource information of a plurality of user equipment (UE);
a processing module, configured to divide the calculation task into a plurality of calculation sub-tasks to be executed in a distributed manner by the first network elements and/or UE based on the task information and the calculation resource information;
a processing module, configured to determine a plurality of task execution results of the plurality of calculation sub-tasks; and
a sending module, configured to send the plurality of task execution results to the AF via a second network element.

22. A task processing device, applied to an application function (AF), the device comprising:
a receiving module, configured to receive calculation service requests sent by a plurality of user equipment (UE) via an access and mobility management function (AMF), wherein the calculation service requests comprise calculation task requirement information and calculation resource information of the plurality of UEs;
a sending module, configured to send a task calculation request to a first network element in response to the calculation service request, wherein the task calculation request carries task information of a calculation task and the calculation resource information of the plurality of UEs, and the task calculation request is configured to instruct the first network element to divide the calculation task into a plurality of calculation sub-tasks to be executed in a distributed manner by the first network element and/or UEs based on the task information and the calculation resource information.

23. A task processing device, applied to a user equipment (UE), the device comprising:
a sending module, configured to send a calculation service request to an application function (AF) via an access and mobility management function (AMF);
wherein the calculation service request is configured to trigger the AF to send a task calculation request to a first network element, the task calculation request carries task information of a calculation task and calculation resource information of a plurality of UEs, and the task calculation request is configured to instruct the first network element to divide the calculation task into a plurality of calculation sub-tasks to be executed in a distributed manner by the first network element and/or UEs based on the task information and the calculation resource information.

24. A task processing device, applied to a core network, the device comprising:
a receiving module, configured to receive calculation service requests sent by a plurality of user equipment (UE), wherein the calculation service requests comprise calculation task requirement information and calculation resource information of the plurality of UEs;
a processing module, configured to divide the calculation task into a plurality of calculation sub-tasks to be executed in a distributed manner by the first network element and/or UEs in response to the calculation service request;
wherein the processing module is configured to analyze a plurality of task execution results of the plurality of calculation sub-tasks to obtain a task processing result of the calculation task; and
a sending module, configured to send the task processing result of the calculation task to the UE.

25. A communication device, comprising a transceiver; a memory; and a processor connected to the transceiver and the memory respectively, configured to control a wireless signal reception and transmission of the transceiver by executing computer-executable instructions on the memory and to implement the method of any one of claims 1 to 20.

26. A computer storage medium, having computer-executable instructions stored thereon; wherein after the computer-executable instructions are executed by a processor, the method of any one of claims 1 to 20 is implemented.
